(19) Europäisches Patentamt
European Patent Office
Office européen des brevets

(11) **EP 3 620 998 B1**

(12) **EUROPÄISCHE PATENTSCHRIFT**

(45) Veröffentlichungstag und Bekanntmachung des Hinweises auf die Patenterteilung:
**30.04.2025   Patentblatt 2025/18**

(21) Anmeldenummer: **19191279.9**

(22) Anmeldetag: **12.08.2019**

(51) Internationale Patentklassifikation (IPC):
**G06N 20/10** (2019.01)   **G06N 7/01** (2023.01)
**G06N 5/01** (2023.01)

(52) Gemeinsame Patentklassifikation (CPC):
**G06N 20/10; G06N 5/01; G06N 7/01**

(54) **VERFAHREN ZUM SICHEREN TRAINIEREN EINES DYNAMISCHEN MODELLS**

METHOD FOR SAFE TRAINING OF A DYNAMIC MODEL

PROCÉDÉ DE FORMATION FIABLE D'UN MODÈLE DYNAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:   **05.09.2018   DE 102018215061**

(43) Veröffentlichungstag der Anmeldung:
**11.03.2020   Patentblatt 2020/11**

(73) Patentinhaber: **Robert Bosch GmbH**
**70442 Stuttgart (DE)**

(72) Erfinder:
• **Nguyen-Tuong, The Duy**
**75365 Calw (DE)**
• **Meister, Mona**
**70567 Stuttgart (DE)**
• **Zimmer, Christoph**
**70825 Korntal (DE)**

(56) Entgegenhaltungen:
• **MARK SCHILLINGER ET AL: "Safe Active Learning and Safe Bayesian Optimization for Tuning a PI-Controller", IFAC-PAPERSONLINE, vol. 50, no. 1, 1 July 2017 (2017-07-01), DE, pages 5967 - 5972, XP055634713, ISSN: 2405-8963, DOI: 10.1016/j.ifacol.2017.08.1258**
• **TORSTEN KOLLER ET AL: "Learning-based Model Predictive Control for Safe Exploration and Reinforcement Learning", ARXIV.ORG, CORNELL UNIVERSITY LIBRARY, 201 OLIN LIBRARY CORNELL UNIVERSITY ITHACA, NY 14853, 22 March 2018 (2018-03-22), XP080861878**
• **JONATHAN BINNEY ET AL: "Informative path planning for an autonomous underwater vehicle", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 May 2010 (2010-05-03), pages 4791 - 4796, XP031708821, ISBN: 978-1-4244-5038-1**

# EP 3 620 998 B1

## Beschreibung

Die Erfindung betrifft ein Verfahren mit Sicherheitsbedingung zum aktiven Lernen zur Modellierung dynamischer Systeme mit Hilfe von Zeitreihen basierend auf Gauß'schen Prozessen, ein System, das mit diesem Verfahren trainiert wurde, ein Computerprogramm das Anweisungen umfasst, welche eingerichtet sind, das Verfahren auszuführen, wenn es auf einem Computer ausgeführt wird, ein maschinenlesbares Speichermedium, auf dem das Computerprogramm gespeichert ist und einen Computer, der eingerichtet ist, das Verfahren auszuführen.

Stand der Technik

Die Veröffentlichung der Autoren Mark Schillinger et al: "Safe Active Learning and Safe Bayesian Optimization for Tuning a PI-Controller", IFAC-PAPERSONLINE, Bd. 50, Nr. 1, 1. Juli 2017 (2017-07-01), Seiten 5967-5972, DE ISSN: 2405-8963, DOI: 10.1016/j.ifacol.2017.08.1258 offenbart ein Verfahren zum sicheren Lernen mittels eines Bayes'schen Optimierung.

Aus "Safe Exploration for Active Learning with Gaussian Processes" von J. Schreiter, D. Nguyen-Tuong, M. Eberts, B. Bischoff, H. Markert und M. Toussaint (ECML/PKDD, Band 9286, 2015) ist sichere Exploration bei aktivem Lernen bekannt. Konkret werden punktuelle Daten in statischem Zustand erfasst.

Aktives Lernen befasst sich mit sequentieller Datenkennzeichnung zum Lernen einer unbekannten Funktion. Hierbei werden die Datenpunkte sequentiell so zur Kennzeichnung ausgewählt, so dass die Verfügbarkeit der für die Approximation an die unbekannte Funktion erforderlichen Informationen maximiert wird. Das generelle Ziel ist es ein genaues Modell zu erstellen ohne mehr Informationen bereitzustellen als notwendig. Dadurch wird das Modell effizienter, da möglicher Weise kostenintensive Messungen vermieden werden können.

Zur Klassifizierung von Daten, z.B. zur Kennzeichnung von Bilder, ist aktives Lernen weitverbreitet. Für aktives Lernen bei Zeitreihenmodellen, die physikalische Systeme repräsentieren, müssen die Daten derart erzeugt werden, dass relevante dynamische Vorgänge erfasst werden können.

Das bedeutet, das physikalische System muss durch dynamisches Bewegen im Eingabebereich durch Eingabekurven derart angeregt werden, dass die gesammelten Daten, d.h. Eingabe- und Ausgabekurven, so viele Informationen über die Dynamiken enthalten wie möglich. Beispiele für Eingabekurven, die verwendet werden können sind unter anderem Sinus-, Rampen- und Treppenfunktionen, und weißes Rauschen. Beim Anregen der physikalischen Systeme müssen jedoch zusätzlich auch Sicherheitsanforderungen beachtet werden. Die Anregung darf das physikalische System nicht beschädigen, während der Eingabebereich dynamisch exploriert wird.

Daher ist es wichtig, Bereiche zu identifizieren, in denen die dynamische Anregung sicher ausgeführt werden kann.

Vorteile der Erfindung

Das Verfahren mit den Merkmalen des unabhängigen Anspruch 1 hat dem Stand der Technik gegenüber den Vorteil, dass es dynamische Exploration, aktive Exploration und sichere Exploration kombiniert.

Hierbei wird unter dynamischer Exploration das Erfassen von Informationen unter wechselnden Bedingungen des zu vermessenden Systems verstanden. Aktive Exploration zielt auf ein möglichst schnelles Erfassen von Informationen ab, wobei der Reihe nach Informationen möglichst derart erfasst werden, dass in kurzer Zeit viele Informationen erfasst werden können. In anderen Worten, der Informationsgewinn der einzelnen Messung wird maximiert. Sichere Exploration schließlich stellt sicher, dass das zu vermessende System möglichst nicht beschädigt wird.

Mit dem erfindungsgemäßen Verfahren können diese drei Arten der Exploration kombiniert werden.

Durch die in den abhängigen Ansprüchen aufgeführten Maßnahmen sind vorteilhafte Weiterbildungen und Verbesserungen des im unabhängigen Anspruch angegebenen Verfahrens möglich.

Offenbarung der Erfindung

Die vorliegende Erfindung offenbart eine aktive Lernumgebung mit dynamischer Exploration (aktives Lernen) für Zeitreihenmodelle, basierend auf Gaußprozessen, die den Gesichtspunkt der Sicherheit berücksichtigt, indem ein geeignetes Kriterium für die dynamische Exploration des Eingabebereichs abgeleitet wird.

Aktives Lernen ist nützlich bei einer Reihe von Anwendungen, wie etwa in Simulationen und Prognoserechnungen. Das Ziel von Lernverfahren ist es generell, ein Modell zu erstellen, das die Realität beschreibt. Dazu wird ein realer Vorgang, ein reales System oder ein realer Gegenstand vermessen, nachstehend auch als Ziel benannt, in dem Sinne, dass Informationen über das Ziel erfasst werden. Das erstellte Realitätsmodell kann dann anstelle des Zieles bei einer Simulation oder einer Prognoserechnung verwendet werden. Der Vorteil dieses Vorgehens, liegt in der Ersparnis, den Vorgang nicht wiederholen zu müssen, da dabei meist Ressourcen verbraucht werden, bzw. dass der Gegenstand oder das System nicht dem zu simulierenden Prozess ausgesetzt wird, und dabei evtl. verbraucht, beschädigt oder verändert wird.

Vorteilhaft ist es, wenn das Modell die Realität möglichst genau beschreibt. Bei der vorliegenden Erfindung ist insbesondere vorteilhaft, dass aktives Lernen unter Berücksichtigung von Sicherheitsbedingungen eingesetzt werden kann. Diese Sicherheitsbedingungen sollen sicherstellen, dass das zu erfassende Ziel möglichst wenig negativ/kritisch beeinflusst wird z.B. in dem Sinne, dass der Gegenstand oder das System beschädigt werden.

Bei der Erfindung wird ein Gaußprozess mit einer Zeitreihenstruktur verwendet, z.B. mit der nichtlinearen exogenen Struktur oder der nichtlinearen autoregressiven exogenen Struktur. Durch dynamische Exploration des Eingabebereichs werden für das Zeitreihenmodell angemessene Eingabe- und Ausgabekurven, bzw. Ausgabemessungen, generiert. Die Ausgabemessungen, d.h. die Datenkennzeichnung, dienen als Informationen für das Zeitreihenmodell. Dabei wird die Eingabekurve in aufeinanderfolgende Kurvenbereiche, z.B. aufeinanderfolgende Abschnitte von Rampen- oder Stufenfunktionen, parametrisiert, die bei gegebenen Sicherheitsanforderungen und vorgehender Beobachtungen schrittweise durch einen explorativen Ansatz bestimmt werden.

Der jeweilig nachfolgende Abschnitt wird unter Berücksichtigung der vorherigen Beobachtungen so bestimmt, dass der Informationsgewinn hinsichtlich eines Kriteriums bezüglich des Modells maximiert wird.

Hierbei wird ein Gaußprozess mit nichtlinearen exogenen Strukturen mit einem geeigneten Explorationskriterium als Zeitreihenmodell verwendet. Gleichzeitig wird ein weiteres Gaußprozess-Modell verwendet, um hinsichtlich der gegebenen Sicherheitserfordernisse sichere Eingabebereiche zu prognostizieren. Die Abschnitte der Eingabekurve werden durch Lösen eines Optimierungsproblems mit Nebenbedingungen zur Berücksichtigung der Sicherheitsprognose bestimmt.

Beispielhafte Anwendungen der Erfindung sind z.B. Prüfstände für Brennkraftmaschinen, bei denen Abläufe in den Maschinen simuliert werden können sollen. Zu erfassende Parameter hierbei sind z.B. Druckwerte, Abgaswerte, Verbrauchswerte, Leistungswerte, etc. Eine weitere Anwendung ist z.B. das Lernen dynamischer Modelle von Robotersteuerungen, bei denen ein Dynamikmodell zu erlernen ist, das Gelenkpositionen auf Gelenkmomente des Roboters abbildet, die für die Steuerung der Roboter verwendet werden können. Dieses Modell kann aktiv durch Exploration des Gelenkbereichs erlernt werden, dies sollte jedoch auf eine sichere Weise durchgeführt werden, so dass die Bewegungsgrenzen der Gelenke nicht überschritten werden, wodurch die Roboter beschädigen werden können. Eine weitere Anwendung ist z.B. das Erlernen eines dynamischen Modells, das als Ersatz für einen physikalischen Sensor dient. Die Daten zum Lernen dieses Modells können aktiv durch Exploration auf dem physikalischen System erzeugt und gemessen werden. Dabei ist eine sichere Exploration unerlässlich, da eine Messung in einer unsicheren Region das physische System beschädigen kann. Eine weitere Anwendung ist z.B. das Erlernen des Verhaltens einer chemischen Reaktion, bei dem die Sicherheitsanforderungen Parameter wie Temperatur, Druck, Säuregehalt oder Ähnliches betreffen können.

Kurze Beschreibung der Zeichnungen

Ausführungsbeispiele der Erfindung sind in der Zeichnung dargestellt und in der nachfolgenden Beschreibung näher erläutert. Es zeigt:

Figur 1 den Ablauf 100 des Verfahrens zum sicheren Trainieren eines computergestützten Modells;
Figur 2 den Ablauf 200 des Verfahrens zum sicheren Trainieren eines computergestützten Modells.

Ausführungsformen der Erfindung

Die Approximation an eine unbekannte Funktion $f: X \subset \mathbb{R}^d \to Y \subset \mathbb{R}$ soll erreicht werden. Im Falle von Zeitreihenmodellen, wie etwa dem wohlbekannten nichtlinearen exogenen (NX) Modell, besteht der Eingabebereich aus diskretisierten Werten, den so genannten Stellgrößen.

Mit $x_k$ für den Zeitpunkt $k$ gilt: $x_k = (u_k, u_{k-1}, \dots, u_{k-\tilde{d}+1})$, wobei $(u_k)_k, u_k \in \Pi \subset \mathbb{R}^{\bar{d}}$ die diskretisierte Stellkurve darstellt. Dabei ist $\bar{d}$ die Dimension des Eingabebereichs $\Pi$ des Systems, $\tilde{d}$ die Dimension der NX-Struktur und $d = \bar{d} \cdot \tilde{d}$ die Dimension von $X$.

Die Elemente $u_k$ werden von dem physikalischen System gemessen und müssen nicht äquidistant sein. Aus Gründen der einfacheren Notation wird exemplarisch von einer Äquidistanz ausgegangen. Im Allgemeinen sind die Steuerkurven kontinuierliche Signale und können explizit gesteuert werden.

In der Lernumgebung des Modells werden Daten in Form von $n$ aufeinanderfolgenden Kurvenabschnitten

$\mathcal{D}_n^f = \{\tau_i, \rho_i\}_{i=1}^n$ , beobachtet, wobei die Eingabekurve $\tau_i$ eine Matrix ist und aus m Eingabepunkten der Dimension d

besteht, d.h. $\tau_i = (x_1^i, \ldots, x_m^i) \in \mathbb{R}^{d \times m}$. Die Ausgabekurve $\rho_i$ enthält $m$ entsprechende Ausgabemessungen, d.h. $\rho_i = (y_1^i, \ldots, y_m^i) \in \mathbb{R}^m$.

Der nächste, als Anregung in das physikalische System einzugebende, Kurvenabschnitt $\tau_{n+1}$ soll nun derart bestimmt werden, dass der Informationsgewinn $\mathcal{D}_{n+1}^f$ hinsichtlich des Modellierens von *f* gesteigert wird, allerdings unter Berücksichtigung der Sicherheitsbedingungen.

Zur Approximation an die Funktion f wird ein Gaußprozess (im Folgenden abgekürzt durch GP) verwendet, der festgelegt ist durch seine Mittelwertfunktion $\mu(x)$ und seine Kovarianzfunktion $k(x_i, x_j)$, d.h. $f(x_i) \sim \mathcal{GP}(\mu(x_i), k(x_i, x_j))$.

Unter der Annahme von rauschbehafteten Beobachtungen der Eingabe- und Ausgabekurven, ist die gemeinsame Verteilung gemäß des Gaußprozesses gegeben als $p(P_n|T_n) = \mathcal{N}(P_n|0, K_n + \sigma^2 I)$, wobei $P_n \in \mathbb{R}^{n \cdot m}$ ein Vektor ist, der Ausgabekurven verbindet, und $T_n \in \mathbb{R}^{n \cdot m \times d}$ eine Matrix ist, die Eingabekurven enthält. Die Kovarianzmatrix wird durch $K_n \in \mathbb{R}^{n \cdot m \times n \cdot m}$ dargestellt. Zur Veranschaulichung wird als Kovarianzfunktion ein Gaußkern eingesetzt, d.h.

$$k(x_i, x_j) = \sigma_f^2 \exp\left(-\frac{1}{2}\left(x_i - x_j\right)^T \Lambda_f^2 \left(x_i - x_j\right)\right)$$

, der durch $\theta_f = (\sigma_f^2, \Lambda_f^2)$ parametrisiert wird. Weiterhin werden ein Nullvektor $0 \in \mathbb{R}^{n \cdot m}$ als Mittelwert, eine *nm*dimensionale Identitätsmatrix *I* und $\sigma^2$ als Ausgaberauschvarianz angenommen.

Unter der gegebenen gemeinsamen Verteilung kann die prognostizierte Verteilung $p(\rho^*|\tau^*, \mathcal{D}_n^f)$ für einen neuen Kurvenabschnitt $\tau^*$ ausgedrückt werden als

[Gleichung A:] $\qquad p(\rho^*|\tau^*, \mathcal{D}_n^f) = \mathcal{N}(\rho^*|\mu(\tau^*), \Sigma(\tau^*)),$

wobei

[Gleichung B:] $\qquad \mu(\tau^*) = k(\tau^*, T_n)^T (K_n + \sigma^2 I)^{-1} P_n,$

[Gleichung C:] $\qquad \Sigma(\tau^*) = k^{**}(\tau^*, \tau^*) - k(\tau^*, T_n)^T (K_n + \sigma^2 I)^{-1} k(\tau^*, T_n),$

wobei $k^{**} \in \mathbb{R}^{m \times m}$ eine Matrix mit $k_{ij}^{**} = (x_i, x_j)$ ist. Weiterhin enthält die Matrix $k \in \mathbb{R}^{m \times n \cdot m}$ Kernauswertungen bezüglich $\tau^*$ der vorherigen *n* Eingabekurven. Da die Kovarianzmatrix vollständig gefüllt ist, korrelieren die Eingabepunkte x sowohl vollständig mit einem Kurvenabschnitt, als auch über verschiedene Kurven hinweg, unter Ausnutzung der Korrelationen zum Planen der nächsten Kurve. Da die Matrix $K_n + \sigma^2 I$ möglicher Weise eine hohe Dimensionszahl $n \cdot m$ aufweist, kann deren Invertierung zeitaufwendig sein, so dass GP-Approximationstechniken eingesetzt werden können.

Der Sicherheitszustand des Systems wird durch eine unbekannte Funktion *g* beschrieben, mit $g: X \subset \mathbb{R}^d \to Z \subset \mathbb{R}$, die jedem Eingabepunkt *x* einen Sicherheitswert *z* zuweist, der als Sicherheitsindikator dient. Die Werte *z* werden unter Verwendung von Informationen aus dem System bestimmt, und sind derart eingerichtet, dass für alle Werte von *z*, die größer oder gleich Null sind, der entsprechende Eingabepunkt *x* als sicher gilt.

Solche Sicherheitswerte z hängen vom jeweiligen System ab, und können wie oben erläutert systemabhängig Werte verkörpern für sichere oder unsichere Druckwerte, Abgaswerte, Verbrauchswerte, Leistungswerte, Gelenkpositionswerte, Bewegungsgrenzen, Sensorwerte, Temperaturwerte, Säuregehaltwerte oder Ähnliches.

Die Werte von z sind im Allgemeinen kontinuierlich und zeigen den Abstand eines gegebenen Punktes x von der unbekannten Sicherheitsgrenze im Eingabebereich an. Daher kann mit der gegebenen Funktion *g* oder einer Schätzung davon das Sicherheitsniveau für eine Kurve $\tau$ ermittelt werden. Eine Kurve wird als sicher eingestuft, falls die Wahrscheinlichkeit dafür, dass deren Sicherheitswert z größer als Null ist ausreichend groß ist, d.h. $\int_{z_1, \ldots, z_m \geq 0} p(z_1, \ldots, z_m|\tau)$ $dz_1, \ldots, z_m > 1 - \alpha$, wobei $\alpha \in [0,1]$ den Schwellwert dafür darstellt, dass $\tau$ unsicher ist. Mit den gegebenen Daten $\mathcal{D}_n^g = \{\tau_i, \zeta_i\}_{i=1}^n$, wobei $\zeta_i = (z_1^i, \ldots, z_m^i) \in \mathbb{R}^m$, kann ein GP eingesetzt werden, um die Funktion *g* zu approximieren. Die Prognoseverteilung $p(\zeta^*|\tau^*, \mathcal{D}_n^g)$ für einen gegebenen Kurvenabschnitt $\tau^*$ wird berechnet als

[Gleichung D:] $$p\big(\zeta^*\big|\tau^*,\mathcal{D}_n^g\big) = \mathcal{N}\left(\zeta^*\big|\mu_g(\tau^*),\Sigma_g(\tau^*)\right),$$

wobei $\mu_g(\tau^*)$ und $\Sigma_g(\tau^*)$ die entsprechenden Mittelwert- und Kovarianzwerte sind. Die Größen $\mu_g$ und $\Sigma_g$ werden berechnet wie in Gleichung 2 bzw. 3 gezeigt, jedoch mit $Z_n \epsilon \mathbb{R}^{n\cdot m}$ als Zielvektor, der alle $\zeta_i$ verbindet. Durch den Einsatz eines GP zur Approximation von $g$ kann die Sicherheitsbedingung $\xi(\tau)$ für eine Kurve $\tau$ wie folgt berechnet werden:

[Gleichung E:] $$\xi(\tau) = \int_{z_1,\ldots,z_m \geq 0} \mathcal{N}\left(\zeta\big|\mu_g(\tau),\Sigma_g(\tau)\right) dz_1,\ldots,z_m > 1-\alpha.$$

Im Allgemeinen ist die Berechnung von $\xi(\tau)$ analytisch nur schwer lösbar und daher kann eine gewisse Approximation verwendet werden, wie etwa eine Monte-Carlo-Simulation oder Erwartungswertausbreitung (engl. "Expectation Propagation").

Für die effiziente Auswahl eines optimalen $\tau$ muss die Kurve in geeigneter Weise parametrisiert werden. Eine Möglichkeit ist es, die Parametrisierung bereits im Eingabebereich vorzunehmen. Die Parametrisierung der Kurve kann beispielsweise als Rampen- oder Stufenfunktionen umgesetzt werden.

Für eine Kurvenparametrisierung mit einer Prognoseverteilung gemäß Gleichung A und Sicherheitsbedingungen gemäß Gleichung E kann der nächste Kurvenabschnitt $\tau_{n+1}(\eta^*)$ durch Lösen des folgenden Optimierungsproblems mit Nebenbedingung erhalten werden:

[Gleichung F:] $$\eta^* = argmax_{\eta \in \Pi}\mathcal{J}(\Sigma(\eta))$$

[Gleichung G:] $$\text{so dass } \xi(\eta) > 1-\alpha,$$

wobei $\eta \in \Pi$ die Kurvenparametrisierung und $\mathcal{J}$ ein Optimalitätskriterium darstellt.

Gemäß Gleichung F wird die prädiktive Varianz $\Sigma$ aus Gleichung A für die Exploration verwendet. Diese ist eine Kovarianzmatrix, die durch das Optimalitätskriterium $\mathcal{J}$ auf eine reelle Zahl abgebildet wird, wie in Gleichung F gezeigt. Für $\mathcal{J}$ können unterschiedliche Optimalitätskriterien in Abhängigkeit vom System verwendet werden. So kann $\mathcal{J}$ beispielsweise die Determinante, d.h. äquivalent zur Maximierung des Volumens des Vorhersagevertrauensellipsoids der Multinormalverteilung, die Spur, d.h. äquivalent zur Maximierung der durchschnittlichen Vorhersagevarianz, oder der maximale Eigenwert, d.h. äquivalent zur Maximierung der größten Achse des Vorhersagevertrauensellipsoids sein. Andere Optimalitätskriterien sind aber ebenfalls denkbar.

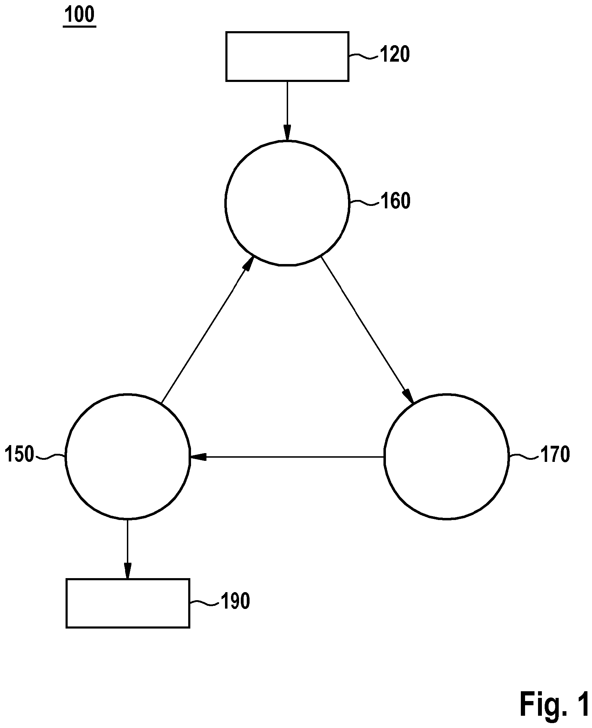

Bezugnehmend auf Figur 1 werden in Schritt 120 eine Initialisierung durchgeführt, indem $n_0$ sichere Initialkurven ausgeführt werden. Es werden hierbei auch Regressions- und Sicherheitsprozess, Gaußprozesse, erstellt. Die initialen Kurven befinden sich in einem kleinen sicheren Bereich, in welchem die Exploration beginnt. Dieser kleine sichere Bereich wird vorab durch Vorkenntnisse über das System ausgewählt. Die initialen Kurven werden bestimmt zu $\mathcal{D}_0^{f,g} = \{\tau_i,\rho_i,\zeta_i\}_{i=1}^n$ mit $n = n_0$.

Nachfolgend wird in Schritt 160 gemäß Gleichungen F und G ein neuer Kurvenabschnitt $\tau_{n+1}$ bestimmt, indem $\eta$ optimiert wird.

Anschließend wird in Schritt 170 der bestimmte Kurvenabschnitt $\tau_{n+1}$ als Eingabe verwendet, und in diesem Bereich $\rho_{n+1}$ und $\zeta_{n+1}$ auf dem physikalischen System gemessen.

Danach werden in Schritt 150 die Regressions- und Sicherheitsprozesse aktualisiert. Das Regressionsmodell $f$ wird gemäß Gleichung A unter Verwendung von $\mathcal{D}_n^f = \{\tau_i,\rho_i\}_{i=1}^n$ aktualisiert, und das Sicherheitsmodell $g$ wird gemäß Gleichung D unter Verwendung von $\mathcal{D}_n^g = \{\tau_i,\zeta_i\}_{i=1}^n$ aktualisiert.

Die Schritte 150 bis 170 werden hierbei N-mal durchlaufen. Neben einer vorher festgelegten Anzahl von Durchläufen ist auch ein automatisches Beenden nach Erreichen einer Abbruchbedingung denkbar. Diese könnte z.B. basieren auf Trainingsfehler (Fehlermaß auf Modellprädiktion und Systemantwort) oder auf zusätzlichen möglichen Informationsgewinn (wenn das Optimalitätskriterium zu klein wird).

Im Anschluss daran, wird in Schritt 190 das Regressions- und das Sicherheitsmodell ausgegeben.

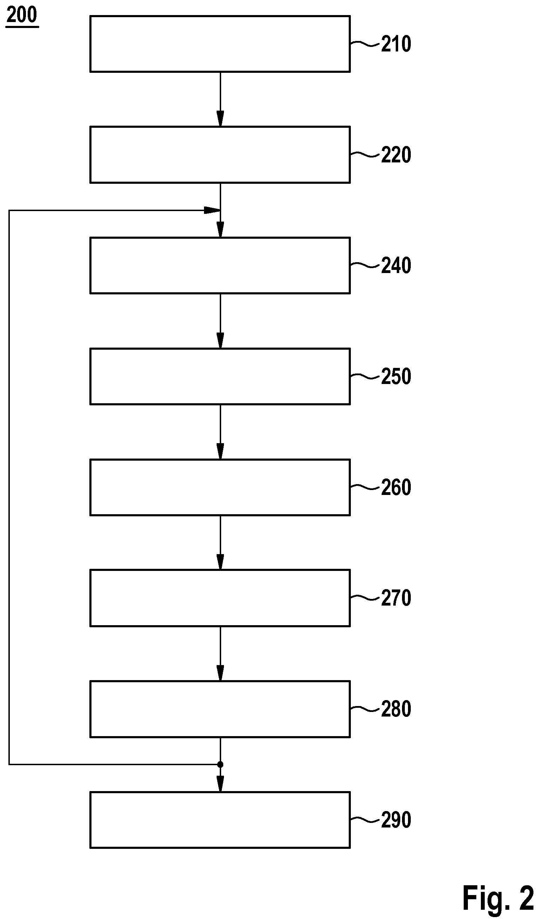

Bezugnehmend auf Figur 2, wird eine Implementierung 200 des Verfahrens erläutert. In Schritt 210 wird ein Sicherheitsschwellwert festgelegt. Dabei wird für $\alpha$ ein Wert zwischen 0 und 1 gewählt. Daraufhin wird in Schritt 220 eine Initialisierung durchgeführt, indem $n_0$ sichere Initialkurven, $\mathcal{D}_0^{f,g} = \{\tau_i,\rho_i,\zeta_i\}_{i=1}^n$ mit $n = n_0$, ausgeführt werden. Es

werden hierbei auch Regressions- und Sicherheitsprozess, Gaußprozesse, erstellt. Die initialen Kurven befinden sich in einem kleinen sicheren Bereich, in welchem die Exploration beginnt. Dieser kleine sichere Bereich wird vorab durch Vorkenntnisse über das System ausgewählt.

Nachfolgend wird der die Schritte 240 bis 280 umfassende Teil des Verfahrens N-mal ausgeführt, wobei k die Laufvariable ist, d.h. den aktuellen Durchlauf anzeigt. Wie in Figur 1 ist neben einer vorher festgelegten Anzahl von Durchläufen auch ein automatisches Beenden nach Erreichen einer Abbruchbedingung denkbar. Diese könnte z.B. basieren auf Trainingsfehler (Fehlermaß auf Modellprädiktion und Systemantwort) oder auf zusätzlichen möglichen Informationsgewinn (wenn das Optimalitätskriterium zu klein wird).

Zuerst wird in Schritt 240 das Regressionsmodell f gemäß Gleichung A unter Verwendung von

$$\mathcal{D}_{k-1}^f = \{\tau_i, \rho_i\}_{i=1}^n$$

aktualisiert. In Schritt 250 wird das Sicherheitsmodell $g$ gemäß Gleichung D unter Verwendung von

$$\mathcal{D}_{k-1}^g = \{\tau_i, \zeta_i\}_{i=1}^n$$

aktualisiert. Beim ersten Durchlaufen der Schritte 240 bis 280 können die Schritte 240 und 250 entfallen.

Anschließend wird in Schritt 260 gemäß Gleichungen F und G ein neuer Kurvenabschnitt $\tau_{n+1}$ bestimmt, indem $\eta$ optimiert wird.

Danach wird in Schritt 270 der bestimmte Kurvenabschnitt $\tau_{n+1}$ als Eingabe verwendet, und in diesem Bereich $\rho_{n+1}$ und $\zeta_{n+1}$ auf dem physikalischen System gemessen.

Nachfolgend werden in Schritt 280 die in den vorherigen Schritten verarbeiteten Eingabe- und Ausgabekurven zu $\mathcal{D}_{k-1}^f$ bzw. $\mathcal{D}_{k-1}^g$ hinzugefügt.

Nach Abschluss der Wiederholungen der Schritte 240 bis 280 folgt der Schritt 290, in dem das Regressions- und das Sicherheitsmodell aktualisiert und ausgegeben werden.

Das inkrementelle Aktualisieren der GP-Modelle für neue Daten, d.h. Schritte 150, bzw. 240 und 250 können effizient durchgeführt werden, z.B. durch Aktualisierung des Ranges der Matrix (rank-one update). Obwohl hier exemplarisch eine NX-Struktur in Kombination mit dem GP-Modell zur Zeitreihenmodellierung gezeigt wird, kann jedoch auch der generelle nichtlineare auto-regressive exogenen Fall verwendet werden, d.h. GP mit NARX-Eingabe-Struktur, wobei $x_k = (y_k, y_{k-1}, \ldots, y_{k-q}, u_k, u_{k-1}, \ldots, u_{k-d})$. Hierbei kann zur Optimierung und zur Planung für den nächsten Kurvenabschnitt beispielsweise der Prognose-Mittelwert von $p(\rho|\tau, \mathcal{D}_n^f)$ als Ersatz für $y_k$ verwendet werden. Die Eingabeanregung des Systems wird im Falle von NARX dennoch über die Stellgröße $u_k$ durchgeführt.

## Patentansprüche

1. Computer-implementiertes Verfahren (200) zum sicheren, dynamischen Explorieren eines Eingabewertebereichs eines physikalischen Systems zum Trainieren eines zeitreihenbasierten Modelles des physikalischen Systems, mit den Schritten:

   Festlegen (210) eines Sicherheits-Schwellwertes, $\alpha$;
   Initialisieren (220) durch Ausführen von sicheren Initialkurven als Eingabewerte auf dem physikalischen System, Erstellen eines initialen Regressionsmodells und eines initialen Sicherheitsmodells,
   wobei das Regressionsmodell und das Sicherheitsmodell jeweils Gauß'sche Prozesse sind,
   wobei das Sicherheitsmodell ausgebildet ist, einen Sicherheitswert, z, auszugeben,
   welcher einen Abstand eines gegeben Kurvenpunktes, x, von einer unbekannten Sicherheitsgrenze charakterisiert und angibt, ob der gegebene Kurvenpunkt, x, sicher oder unsicher bezüglich einer Beschädigung des physikalischen Systems ist;
   wiederholtes Durchführen der Schritte Aktualisieren (240) des Regressionsmodells;
   Aktualisieren (250) des Sicherheitsmodells;
   Bestimmen (260) eines neuen Kurvenabschnitts, T, welcher mehrere Kurvenpunkte, $x_1$, ..., $x_m$, umfasst, als Eingabewerte des physikalischen Systems,
   wobei der neue Kurvenabschnitt, T,
   durch Optimierung unter Berücksichtigung einer Sicherheitsbedingung bestimmt wird,
   wobei die Sicherheitsbedingung darin besteht, dass basierend auf den Sicherheitswerten, $z_1$, ..., $z_m$, welche mittels dem Sicherheitsmodell, für die mehreren Kurvenpunkte des Kurvenabschnittes ermittelt wurden, der Kurvenabschnitt, T, als sicher eingestuft wird, falls die Wahrscheinlichkeit $\int_{z_1,\ldots,z_m \geq 0} p(z_1, \ldots, z_m|\tau)dz_1, \ldots, z_m$ größer ist als $1 - \alpha$,
   wobei der Sicherheits-Schwellwertes, $\alpha$, einen Schwellenwert dafür angibt, dass der neuen Kurvenabschnitt unsicher ist;

Ausführen (270) des bestimmten neuen Kurvenabschnitts auf dem physikalischen System und Messen von Ausgabewerten;

Einbeziehen (280) der Ausgabewerte in das Regressions- und in das Sicherheitsmodell

bis eine vorgebbare Anzahl N von Durchläufe durchgeführt wurden; und

Aktualisieren und Ausgeben (290) des Regressions- und des Sicherheitsmodells.

2. Verfahren nach Anspruch 1, wobei der neue Kurvenabschnitt so bestimmt wird (260), dass unter Erfüllung der Sicherheitskriterien des Sicherheitsmodells der Informationsgewinn maximiert wird.

3. Verfahren nach einem der Ansprüche 1 und 2, wobei der neue Kurvenabschnitt unter Verwendung einer Kovarianzmatrix bestimmt wird (260).

4. Verfahren nach einem der Ansprüche 1 bis 3, wobei das System ein Prüfstand für Brennkraftmaschinen, eine Robotersteuerung, ein physikalischer Sensor oder eine chemische Reaktion ist.

5. Verfahren nach einem der Ansprüche 1 bis 4, wobei das Sicherheitsmodell Sicherheitswerte des Systems umfasst, und zwar mindestens eines aus Druckwerte, Abgaswerte, Verbrauchswerte, Leistungswerte, Gelenkpositionswerte, Bewegungsgrenzen, Sensorwerte, Temperaturwerte oder Säuregehaltwerte.

6. Computerprogramm, umfassend Befehle, die bei der Ausführung des Programms durch einen Computer diesen veranlassen, das Verfahren nach einem der Ansprüche 1 bis 5 auszuführen.

7. Maschinenlesbares Speichermedium, auf dem das Computerprogramm gemäß Anspruch 6 gespeichert ist.

8. Vorrichtung umfassend Mittel zur Ausführung des Verfahrens gemäß einem der Ansprüche 1 bis 5.


**Claims**

1. Computer-implemented method (200) for safe, dynamic exploration of an input value range of a physical system for training a time series-based model of the physical system, comprising the steps of:

   defining (210) a safety threshold value, a;

   initializing (220) by implementing safe initial curves as input values on the physical system, creating an initial regression model and an initial safety model,

   wherein the regression model and the safety model are each Gaussian processes,

   wherein the safety model is designed to output a safety value, z,

   which characterizes a distance between a given curve point, x, and an unknown safety limit and indicates whether the given curve point, x, is safe

   or unsafe in regard to damage to the physical system;

   repeatedly carrying out the steps of

   updating (240) the regression model;

   updating (250) the safety model;

   determining (260) a new curve section, T, which comprises a plurality of curve points, $x_1, ..., x_m$, as input values of the physical system,

   wherein the new curve section, T, is determined by optimization taking into account a safety condition,

   wherein the safety condition is that, on the basis of the safety values, $z_1, ..., z_m$, which were ascertained by means of the safety model for the plurality of curve points of the curve section, the curve section, T, is classified as safe if the probability $\int_{z_{1,...,zm\geq0}} p(z_1, ... ,z_m|\tau)dz_1, ... ,z_m$ is greater than 1 - $a$,

   wherein the safety threshold value, $a$, indicates a threshold value in respect of the new curve section being unsafe;

   implementing (270) the determined new curve section on the physical system and measuring output values;

   including (280) the output values in the regression model and in the safety model until a predefinable number N of passes have been carried out; and

   updating and outputting (290) the regression model and the safety model.

2. Method according to Claim 1, wherein the new curve section is determined (260) in such a way that the information gain is maximized while satisfying the safety criteria of the safety model.

3. Method according to either of Claims 1 and 2, wherein the new curve section is determined (260) using a covariance matrix.

4. Method according to any of Claims 1 to 3, wherein the system is a test bed for internal combustion engines, a robot controller, a physical sensor or a chemical reaction.

5. Method according to any of Claims 1 to 4, wherein the safety model comprises safety values of the system, specifically at least one out of pressure values, exhaust gas values, consumption values, performance values, joint position values, movement limits, sensor values, temperature values or acidity values.

6. Computer program comprising instructions which, when the program is executed by a computer, cause the latter to carry out the method according to any of Claims 1 to 5.

7. Machine-readable storage medium on which the computer program according to Claim 6 is stored.

8. Device comprising means for carrying out the method according to any of Claims 1 to 5.

**Revendications**

1. Méthode mise en œuvre par ordinateur (200) pour l'exploration sûre et dynamique d'une plage de valeurs d'entrée d'un système physique pour la formation d'un modèle basé sur des séries chronologiques du système physique, comprenant les étapes suivantes :

   définir (210) une valeur de seuil de sécurité, a;;
   initialisation (220) en mettant en œuvre des courbes initiales sûres en tant que valeurs d'entrée sur le système physique, créant un modèle de régression initiale et un modèle de sûreté initial,
   dans lequel le modèle de régression et le modèle de sûreté sont des processus gaussiens,
   dans lequel le modèle de sécurité est conçu pour produire une valeur de sécurité, z,
   qui caractérise une distance entre un point de courbe donné, x, et une limite de sécurité inconnue et indique si le point de courbe donné, x, est sûr
   ou dangereux en ce qui concerne les dommages au système physique;
   exécuter à plusieurs reprises les étapes de
   mettre à jour (240) le modèle de régression;
   la mise à jour (250) du modèle de sécurité;
   déterminer (260) une nouvelle section de courbe, T, qui comprend une pluralité de points de courbe, x1, ..., $x_m$, comme valeurs d'entrée du système physique,
   dans lequel la nouvelle section de courbe, T, est déterminée par optimisation en tenant compte d'une condition de sécurité,
   dans laquelle la condition de sécurité est que, sur la base des valeurs de sécurité $z_1$, ..., $z_m$, qui ont été déterminées au moyen du modèle de sécurité pour la pluralité de points de courbe de la section de courbe, la section de courbe, T, est classé comme sûr si la probabilité est supérieure à $1 \int_{z_{1,...},zm \geq 0} p(z_1, ... ,z_m|\tau)dz_1, ... ,z_m$ - a,
   dans *lequel la valeur de seuil de sécurité,* $\alpha$, indique une valeur de seuil en ce qui concerne la nouvelle section de courbe étant dangereuse;
   mettre en œuvre (270) la nouvelle section de courbe déterminée sur le système physique et mesurer les valeurs de sortie;
   y compris (280) les valeurs de sortie dans le modèle de régression et dans le modèle de sûreté jusqu'à ce qu'un nombre prédéterminé N de passages ait été effectué; et
   mettre à jour et produire (290) le modèle de régression et le modèle de sûreté.

2. Procédé selon la revendication 1, dans lequel la nouvelle section de courbe est déterminée (260) de manière à maximiser le gain d'information tout en satisfaisant aux critères de sécurité du modèle de sécurité.

3. Méthode selon l'une ou l'autre des revendications 1 et 2, dans laquelle la nouvelle section de courbe est déterminée (260) à l'aide d'une matrice de covariance.

4. Procédé selon l'une quelconque des revendications 1 à 3, dans lequel le système est un banc d'essai pour moteurs à combustion interne, un contrôleur de robot, un capteur physique ou une réaction chimique.

5. Procédé selon l'une quelconque des revendications 1 à 4, dans lequel le modèle de sécurité comprend des valeurs de sécurité du système, en particulier au moins une valeur hors pression, des valeurs de gaz d'échappement, des valeurs de consommation, des valeurs de performance, des valeurs de position communes, les limites de mouvement, les valeurs des capteurs, les valeurs de température ou les valeurs d'acidité.

6. Programme informatique comprenant des instructions qui, lorsque le programme est exécuté par un ordinateur, obligent ce dernier à exécuter la méthode selon l'une quelconque des revendications 1 à 5.

7. Support de stockage lisible par machine sur lequel le programme informatique selon la revendication 6 est stocké.

8. Dispositif comprenant des moyens pour exécuter la méthode selon l'une quelconque des revendications 1 à 5.

100

120

160

150

170

190

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **MARK SCHILLINGER et al.** Safe Active Learning and Safe Bayesian Optimization for Tuning a PI-Controller. *IFAC-PAPERSONLINE*, 01 July 2017, vol. 50 (1), ISSN 2405-8963, 5967-5972

- **VON J. SCHREITER** ; **D. NGUYEN-TUONG** ; **M. EBERTS** ; **B. BISCHOFF** ; **H. MARKERT** ; **M. TOUSSAINT**. Safe Exploration for Active Learning with Gaussian Processes. *ECML/PKDD*, 2015, vol. 9286